# EUROPEAN PATENT APPLICATION

(11) **EP 3 254 841 A1**
(43) Date of publication of application: **13.12.2017**
(21) Application number: 16173421.5
(22) Date of filing: 07.06.2016
(51) Int. Cl.: B32B 5/02, B32B 5/26, B32B 5/08, B32B 9/02, D04H 1/4209, D04H 1/425

(54) **A COMPOSITE BOARD MADE FROM RECYCLED AND RECYCLABLE MATERIALS**

(71) Applicant: Galle, Rudy, 9750 Zingem (BE); Lootens, Bernard, 9800 Deinze (BE); Moens, Marnix, 1910 Kampenhout (BE)
(72) Inventor: Galle, Rudy, 9750 Zingem (BE)
(74) Representative: BiiP cvba

(57) **Abstract**

The present invention is directed to a composite board at least partially made of a nonwoven composite material, said nonwoven composite material comprising:
- unravelled natural fibers and/or glass fibers,
- plastic fibers, and
- between 10 and 75% weight of liquid based thermoharder.

Further, the present invention is also directed to the use of such composite board in all applications wherein Particle Board (PB), Medium and High Density Fibreboard (MDF & HDF), Oriented Strand Board (OSB), Laminated Veneer Lumber (LVL), Plywood (PLW) and related materials are used, and in wall panels, separation panels, insulation panels, laminates, flooring, in particular laminate flooring, tiles, furniture, and related applications.

In addition, the present invention is directed to a process for manufacturing a composite board comprising mixing unravelled natural fibers and/or glass fibers with plastic fibers thereby forming a fiber layer, and thermoforming said fiber layer into a nonwoven composite material layer, wherein said thermoforming comprising impregnating the fiber layer under vacuum conditions with liquid thermoharder and heating.

## Description

### FIELD OF THE INVENTION

The present invention relates to a composite board at least partially made of a nonwoven composite material.

In addition, the present invention relates to a process for manufacturing a composite board at least partially made of nonwoven composite material layer.

### BACKGROUND

As commonly known, fiberboard, particularly medium-density fiberboard (MDF), is heavily used as building panels and in furniture industry. For pieces that will be visible, a veneer of wood is often glued onto fiberboard to give it the appearance of conventional wood. Further, fiberboard is also used in for example industries such as auto industry to create free-form shapes such as dashboards, rear parcel shelves, and inner door shells. These pieces are then usually covered with a skin, foil, or fabric.

Though the environmental impact of for example MDF has greatly improved over the years by using recycled paper, bamboo, carbon fibers and polymers, forest thinnings, sawmill off-cuts, etc, industry is consistently moving away from wood-based structural members and panels.

Therefore many attemps have been made to develop composite boards based on alternative materials.

One example is US2006111003 describing a hardboard made of nonwoven fibrous material layers using natural fibers, plastic fibers, and bi-component fibers, alternating with woven fiber layers for example of glass fiber.

A clear drawback of the technology described is that, in order to get a composite board with sufficient multi-directional strength, a complex structure of non-woven and woven layers is required.

Considering the above, it is an object of the present invention, to provide a composite board which does not require a complex layer structure in order to achieve sufficient (bi-directional) strength for conventional use.

Another object of the present invention is to provide a composite board having characteristics suitable for being used in heavy duty applications. Impact strength, swell, heat resistance, heat retardancy, dimensional stability may be at least comparable with or improved versus conventional fiberboards or composite boards.

In another object of the present invention a composite board is provided having an impact strength and load resistance comparable with or higher than MDF or HDF boards, such combined with significantly lower weight.

Another object of the present invention is to provide a composite board made of recyclable and/or recycled materials.

Further, it is an object of the present invention to provide an improved method for manufacturing composite boards allowing using recycled and recyclable materials.

Further, the present invention provides a process allowing using porous, hydroscopic, visco-elastic raw materials as a base material in the manufacturing of durable and dimensionally stable composite boards.

### SUMMARY OF THE INVENTION

The present invention is directed to a composite board at least partially made of a nonwoven composite material, said nonwoven composite material comprising:
- unravelled natural fibers and/or glass fibers,
- plastic fibers, and
- between 10 and 75% weight of liquid based thermoharder.

Further, the present invention is also directed to the use of such composite board in all applications wherein Particle Board (PB), Medium and High Density Fibreboard (MDF & HDF), Oriented Strand Board (OSB), Laminated Veneer Lumber (LVL), Plywood (PLW) and related materials are used, and in wall panels, separation panels, insulation panels, laminates, flooring, in particular laminate flooring, tiles, furniture, and related applications.

In addition, the present invention is directed to a process for manufacturing a composite board comprising mixing unravelled natural fibers and/or glass fibers with plastic fibers thereby forming a fiber layer, and thermoforming said fiber layer into a nonwoven composite material layer, wherein said thermoforming comprising impregnating the fiber layer under vacuum conditions with liquid thermoharder and heating.

### DETAILED DESCRIPTION

In an embodiment in accordance with the present invention, a composite board at least partially made of a nonwoven composite material is provided, said nonwoven composite material comprising:
- unravelled natural fibers and/or glass fibers,
- plastic fibers, and
- between 10 and 75% weight of liquid based thermoharder.

In the context of the present invention, the raw natural materials such as jute, hemp, cocos, etc are treated by a bast fibre opening machine or tearing machine to be unravelled to fiber stage. Unravelled natural fibers are also called bast fibers and may be up to severeal centimeters long. The unravelled natural fibers may comprise any natural fiber as for example jute, flax, hemp, sisal, coco, or bamboo, or animal fibers. Alternatively, or in combination with unravelled natural fibers also glass fibers may be used.

The most important types of natural fibres used in composite boards according to the present invention are flax, hemp, jute, kenaf, cocos and sisal due to their properties and availability. Using jute fiber has many advantages. Firstly it has wood like characteristics as it is a bast fibre. Jute has high specific properties, low density, less abrasive behaviour to the processing equipment, good dimensional stability and harmlessness.. The fiber has a high aspect ratio, high strength to weight ratio, and has good insulation properties. Jute is a low cost eco-friendly product and is abundantly available, easy to transport.

In the context of the present invention, the plastic fibers may be freshly produced fibers or may originate from any type of waste or recycled plastic fiber sheet material, such as textile, fabric, carpet, clothing, or big bags (i.e. flexible intermediate bulk containers (FIBC)). In case of recycled plastic fibers, they may be obtained by unravelling or tearing, and optionally subsequently combing, recycled plastic fiber material, woven and non-woven. The plastic fiber material may be of any type of plastic used in the production of plastic fiber materials, woven or nonwoven, as for example polypropylene fibers, polyvinyl fibers, polyethylene fibers, polyester fibers, etc.

In an embodiment in accordance with the present invention, a composite board is provided comprising at least 40%weight at least 50%weight, or at least 60%weight, or at least 80%weight, or at least 90%weight of unravelled natural fibers and/or glass fibers.

In another embodiment in accordance with the present invention, a composite board is provided comprising less than 60%weight, or less than 50%weight, or less than 40%weight, or less than 20%weight or less than 10%weight, or less than 5% of plastic fibers.

Without being bound by any theory, it is believed that using unravelled fibers as described above results in nonwoven composite material having a 3-dimensional netting structure embedded in a plastic and liquid based thermoharder matrix, providing a composite board in accordance with the present invention suitable for being used in heavy duty applications. Impact strength, swell, heat resistance, heat retardancy, dimensional stability may be at least comparable with or improved versus conventional fiberboards or composite boards.

Further, impact strength and load resistance may be comparable with or higher than the characteristics of conventionally used MDF or HDF boards.

Another benefit is that this composite board is made of recyclable and/or recycled materials.

A liquid based thermoharder as used in accordance with the present invention may be any type of liquid thermoharder material allowing mixing with a blend of unravelled natural fibers and/or glass fibers, and plastic fibers. Such liquid thermoharder may be for example polyester-based, or epoxy-based liquid, or a formaldehyde-based liquid, or polyurethane liquid resin, polymethylmethacrylate-based, or a water glass based binder as described in WO2013079635 herewith incorporated by reference , or a biological binding agent including natural and/or synthetic biological substances, conjugates thereof, or derivatives including polymers thereof. An example may be a polysaccharide based binding agent.

Preferably a liquid thermoharder to be used in the present invention may have a viscosity and surface tension suitable for filling empty space in the nonwoven material, substantially without being absorbed by the fibers itself.

Surface tension may be for example between 100 and 300mN/m, preferably between 150 and 300mN/m, more preferably between 200 and 300mN/m.

Viscosity may be between 70 and 1000 mPa.s, or may be preferably between 70 and 700 mPa.s, or more preferably may be between 70 and 350 mPa.s, at 20°C.

For example, a water glass based binder may have a surface tension of about 250 mN/m and a viscosity of 250-300 mPa.s. at 20°.

Another example is epoxy-based resin having a surface tension of about 250 mN/m and a viscosity of about 100 mPa.s. at 20°C.

Using a liquid thermoharder may result in strengthening the plastic fiber matrix and may enhance the formation of even more durable and rigid nonwoven composite material structure.

A composite board in accordance with the present invention may comprise at least 20%weight, at least 30%weight, at least 40%weight, at least 50%weight, at least 60%weight, at least 70% of said liquid based thermoharder, depending on the composite board characteristics to be obtained, such as density, swell, tensile strength, load resistance, etc.

In a particular embodiment of the present invention, a composite board may comprise between 30 and 85%weight unravelled natural fibers and/or glass fibers, between 40 and 5%weight plastic fibers, and between 10 and 65%weight liquid based thermoharder.

In another particular embodiment of the present invention, a composite board may comprise between 30 and 70%weight unravelled natural fibers and/or glass fibers, between 10 and 40%weight plastic fibers and between 20 and 60%weight liquid based thermoharder.

In another particular embodiment of the present invention, a composite board may comprise between 35% and 55%weight unravelled natural fibers and/or glass fibers, 5 and 15%weight plastic fibers, and between 30 and 60%weight liquid based thermoharder.

In addition, a composite board according to the present invention may be at least partially made of nonwoven composite material board, said nonwoven composite material board made of a mono-layer of vacuum impregnated and thermoformed nonwoven composite material, or made of a multilayer of impregnated thermoformed nonwoven composite material layers.

Alternatively, within a multilayer of nonwoven composite material layers several monolayers may be alternated with layers of alternative materials.

A composite board according to the present invention may have at one or more sides an outer layer treated for direct painting or decor printing.

Further, the composite board according to the present invention may comprise at one or more sides one or more finishing layers, such as for example a pre-printing layer suitable for direct printing, and/or a printed decor layer, and/or one or more lacquer or coating layers.

Composite board in accordance with the present invention may be used in all applications wherein Particle Board (PB), Medium and High Density Fibreboard (MDF & HDF), Oriented Strand Board (OSB), Laminated Veneer Lumber (LVL), Plywood (PLW) and related materials are used, and in wall panels, separation panels, insulation panels, laminates, flooring, in particular laminate flooring, tiles, furniture, and related applications.

In addition, the present invention provided a process for manufacturing comprising mixing unravelled natural fibers and/or glass fibers with plastic fibers thereby forming a fiber layer, and thermoforming said fiber layer into a nonwoven composite material layer, wherein said thermoforming comprising impregnating the fiber layer under vacuum conditions with liquid thermoharder and heating.

In the context of the present invention, vacuum impregnation is understood placing the mix of unravelled natural/glass fibers and plastic fibers, for example a needlepunched or spunlaced fiber layer, in a vacuum envelope or bag, said fiber layer exposed to liquid thermoharder before or after placing it in the vacuum envelope or bag, then closing and evacuating air by a vacuum pomp from the envelope or bag to cause the liquid thermoharder to fully impregnate into the fiber layer.

Heating the impregnated fiber layer may be done simultaneously with or after evacuating air, thereby forming the composite material layer under influence of temperature and air pressure.

Said heating may be done by any type of heating having the capacity to sufficiently raise the temperature within the core of the fiber layer during thermoforming under vacuum conditions..

In a particular embodiment, a fiber layer partially impregnated with the liquid thermoharder such that a portion of the fiber layer is not initially contacted with the liquid thermoharder, will fully impregnated by the liquid thermoharder having reduced viscosity at a cure temperature greater than room temperature such that when heated in a vacuum envelope or bag in the absence of autoclave pressure, the liquid thermoharder flows and fully infuses into the fiber layer.

A benefit of using vacuum impregnation is that the impregnation medium, e.g. the liquid thermoharder may improve heat transfer to the core of the fiber layer.

Another benefit of vacuum impregnation is that excess amount of liquid thermoharder may be easily evacuated from the vacuum bag.

The temperature within the core of the composite material mix during thermoforming may be at least 60°C, or at least 80°C, or at least 100°C, or at least 120°C, or at least 140°C.

A process according to the present invention may comprises mixing between 40 and 90%weight unravelled natural fibers and/or glass fibers, and between 10 and 60%weight plastic fibers, said %weight relative to the fiber layer ( not yet contained liquid thermoharder)

Though natural fibers such as jute etc. are porous, hydroscopic, visco-elastic materials, a process according to the present invention enables it's use as a base material in the manufacturing of durable and re-usable composite boards.

The plastic fibers may have a melting point of at least 60°C, or at least 80°C, or at least 100°C, or at least 120°C, or even at least 140°C, such that during thermoforming the unravelled natural fibers (or the glass fibers) become sufficiently embedded within a plastic and liquid thermoharder melt.

The natural or glass fibers, and the plastic fibers may be blended by any conventional technique suitable for intermixing fibers, such as airlaying, needle punching, carding, wet-laying, spunlacing, or a combination thereof. For example, needle punching may be used, which is a technique wherein mechanical interlocking or entanglement of the fibers is achieved by means of thousands of barbed felting needles repeatedly passing into and out of the fiber layer.

The unravelled natural fibers and/or glass fibers and/or the plastic fibers may not be shredded, cut, milled of treated by any other technique with the purpose of decreasing the fiber length as compared to the unravelled natural fiber length or the original plastic fiber length.

The unravelled natural fiber length may be at least 0,5cm, or at least 0.7cm, of which at least 50% is at least 1cm, or a least 2cm, in order to obtain a desired 3-dimensional netting structure. Preferably the fiber length is at least 1.2cm, or preferably at least 1.5cm, or even more preferably at least 4 cm.

The fiber layer of unravelled natural fibers and/or glass fibers, and plastic fibers, may be exposed the liquid thermoharder by spraying or immersing or smearing.

Starting from the fiber layer of intermixed unravelled natural fibers and/or glass fibers, and plastic fibers, liquid thermoharder may be added in an amount of 30 to 300g liquid thermoharder per 100 g fiber layer, or preferably 60 to 200g liquid thermoharder per 100 g fiber layer, or even more preferably 80 to 120 g liquid thermoharder to 100g fiber layer.

In an embodiment of the present invention, a process for manufacturing a composite board is provided comprising thermoforming a plurality of nonwoven composite material layers and connecting them by pressing, vacuum forming, gluing, or welding" thereby forming a multilayer nonwoven composite material board.

In an alternative and preferred embodiment, a plurality of non-impregnated fiber layers is placed in the vacuum bag, and simultaneously impregnated and thermoformed under vacuum conditions, thereby forming a multilayer nonwoven composite material board. The plurality of non-impregnated fiber layers may be treated individually with liquid thermoharder before placing in the bag, for example by spraying or smearing, or may be treated simultaneaously, for example by immersing.

A process for manufacturing a composite board according to the present invention may further comprise a finishing treatment onto one or more sides of the nonwoven composite board material, for example a pre-printing treatment (i.e. preparing the board surface for direct (digital) printing), and/or a decor printing step (i.e. imitation wood print), or coating, painting, waxing, etc.

Alternatively such process may further comprise providing one or more finishing layers and pressing said one or more finishing layers onto one or more sides of the nonwoven composite board material. Such finishing layer may be for example a pre-printing layer suitable for direct (digital) printing, and/or a printed decor layer, and/or one or more lacquer or coating layers.

A composite board according to the present invention may further being processed in all types sawing, cutting, nailing, gluing, grinding, polishing, or painting operations.

As an example, a nonwoven composite board with a thickness of 6mm obtained in accordance with the present invention and by using 100g epoxybased liquid thermoharder per 100g fiber layer, may have following characteristics:
- weight 2-4 kg/m²
- swell: 1,5%
- tensile strength: 4,5 kg/cm²
- max load: 10kg/m²

As another example, a nonwoven composite board with a thickness of 6mm obtained in accordance with the present invention and by using 50 g water glas based liquid thermoharder per 100g fiber layer, may have following characteristics:
- swell: 10%
- tensile strength: 0,8 kg/cm²
- max load: 2,5kg/m²

## Claims

1. A composite board at least partially made of a nonwoven composite material, said nonwoven composite material comprising:
- unravelled natural fibers and/or glass fibers,
- plastic fibers, and
- between 10 and 75% weight of liquid-based thermoharder.

2. A composite board according to claim 1, wherein the nonwoven composite material comprises between 30 and 85%weight unravelled natural fibers and/or glass fibers, between 40 and 5%weight plastic fibers, and between 10 and 65%weight liquid based thermoharder.

3. A composite board according to claim 1, wherein the nonwoven composite material comprises between 30 and 70%weight unravelled natural fibers and/or glass fibers, between 10 and 40%weight plastic fibers and between 20 and 60%weight liquid based thermoharder.

4. A composite board according to claim 1, wherein the nonwoven composite material comprises between 35% and 55%weight unravelled natural fibers and/or glass fibers, 5 and 15%weight plastic fibers, and between 30 a 60%weight liquid based thermoharder.

5. Process for manufacturing a composite board comprising mixing unravelled natural fibers and/or glass fibers with plastic fibers thereby forming a fiber layer, and thermoforming said fiber layer into a nonwoven composite material layer, wherein said thermoforming comprising impregnating the fiber layer under vacuum conditions with liquid thermoharder and heating.

6. Process according to claim 5, wherein the liquid thermoharder is added in an amount of 30 to 300g liquid thermoharder per 100 g fiber layer.

7. Process according to claim 5, wherein the liquid thermoharder is added in an amount of 60 to 200g liquid thermoharder per 100 g fiber layer.

8. Process according to claim 5, wherein the liquid thermoharder is added in an amount of 80 to 120 g liquid thermoharder to 100g fiber layer.

9. Process according to claim 5, wherein a plurality of non-impregnated fiber layers is placed in the vacuum bag, and simultaneously impregnated and thermoformed under vacuum conditions, thereby forming a multilayer nonwoven composite material board.
